# EUROPEAN PATENT APPLICATION

(11) **EP 4 782 914 A1**
(43) Date of publication of application: **29.07.2026**
(21) Application number: 25173896.9
(22) Date of filing: 02.05.2025
(51) Int. Cl.: G02F 1/225

(54) **MACH-ZEHNDER INTERFEROMETERS HAVING FOLDED DELAY ARMS**

(30) Priority: 28.01.2025 US 202519039487
(71) Applicant: GlobalFoundries U.S. Inc., Malta, NY 12020 (US)
(72) Inventor: DASH, Aneesh, 560045 Bangalore (IN); RAKOWSKI, Michal, Malta, NY, 12020 (US)
(74) Representative: Lambacher, Michael

(57) **Abstract**

Structures for a Mach-Zehnder interferometer and methods of forming a structure for a Mach-Zehnder interferometer. The structure comprises a Mach-Zehnder interferometer including a first directional coupler, a second directional coupler, a first delay arm between the first and second directional couplers, and a second delay arm between the first and second directional couplers. The first delay arm includes a portion with a U-shape that surrounds a pocket, and the second delay arm includes a portion with a U-shape that extends into the pocket.

## Description

### BACKGROUND

The disclosure relates to photonic chips and, more specifically, to structures for a Mach-Zehnder interferometer and methods of forming a structure for a Mach-Zehnder interferometer.

Photonic chips are used in many applications and systems including, but not limited to, data communication systems and data computation systems. A photonic chip includes a photonic integrated circuit comprised of photonic components, such as modulators, polarizers, and optical couplers, that are used to manipulate light received from a light source, such as a laser or an optical fiber.

Wavelength division multiplexing is a technology that multiplexes multiple data streams onto a single optical link. In a wavelength-division-multiplexing scheme, a set of data streams is encoded onto optical carrier signals with a different wavelength of light for each data stream. The optical carrier signals of the individual data streams are then combined (i.e., multiplexed) by a set of wavelength-division-multiplexing filters forming a multiplexer, which has a dedicated input for the data stream of each wavelength and a single output at which the individual data streams that are combined into a single multi-wavelength data stream exit for further transport through a single optical link. At the receiver side of the optical link, the optical carrier signals of the individual data streams may be separated (i.e., demultiplexed) by a set of wavelength-division-multiplexing filters of a demultiplexer, and the separated optical carrier signals may be routed to corresponding photodetectors.

Mach-Zehnder interferometers may be used to construct wavelength-division-multiplexing filters. However, conventional Mach-Zehnder interferometers suffer from various disadvantages that restrict their use. As an example, the delay arms of conventional Mach-Zehnder interferometers surround pockets of unused areas because the delay arms extend away from each other in opposite directions. The associated large spacing of the delay arms increases the susceptibility of conventional Mach-Zehnder interferometers to unwanted fabrication variations between the delay arms.

Improved structures for a Mach-Zehnder interferometer and methods of forming a structure for a Mach-Zehnder interferometer are needed.

### SUMMARY

In an embodiment of the invention, a structure comprises a Mach-Zehnder interferometer including a first directional coupler, a second directional coupler, a first delay arm between the first directional coupler and the second directional coupler, and a second delay arm between the first directional coupler and the second directional coupler. The first delay arm includes a portion with a U-shape that surrounds a pocket, and the second delay arm includes a portion with a U-shape that extends into the pocket.

The first directional coupler may include a first bend and a second bend between the first bend and the portion of the first delay arm; further, the first bend may have a curvature that follows a first Bezier curve, and the second bend may have a curvature that follows a second Bezier curve. Further, the second directional coupler may include a third bend and a fourth bend between the third bend and the portion of the second delay arm.

Further, the portion of the first delay arm may include a first section, a second section, and a first bend between the first section and the second section, and the first section may be aligned transverse to the second section. Further, the portion of the second delay arm may include a third section, a fourth section, and a second bend between the third section and the fourth section, and the third section may be aligned transverse to the fourth section. The first section may be aligned parallel to the third section; additionally or alternatively, the second section may be aligned parallel to the fourth section.

Further, the first section of the portion of the first delay arm may be positioned between the first directional coupler and the first bend of the portion of the first delay arm; the third section of the portion of the second delay arm may be positioned between the first directional coupler and the second bend of the portion of the second delay arm; the first section and the third section may have unequal lengths.

Further, the first bend of the portion of the first delay arm may be positioned between the first directional coupler and the second section; the second bend of the portion of the second delay arm may be positioned between the first directional coupler and the fourth section; optionally, the second section and the fourth section may have unequal lengths.

In one variant, the portion of the first delay arm may include a first section, a second section, and a first bend between the first section and the second section, and the first section may be aligned transverse to the second section; the first section may be positioned between the first directional coupler and the first bend, and/or the second section may be positioned between the second directional coupler and the first bend; further, the first directional coupler may include a second bend and a third bend, and the second section may be positioned between the first bend and the second bend; optionally, the second bend may have a curvature that follows a first Bezier curve; further the third bend may have a curvature that follows a second Bezier curve.

The above structure may further comprise a second Mach-Zehnder interferometer including a third directional coupler, a fourth directional coupler, a third delay arm between the third directional coupler and the fourth directional coupler, and a fourth delay arm between the third directional coupler and the fourth directional coupler, the third delay arm including a portion with a U-shape; the portion of the second delay arm may surround a second pocket, and the portion of the third delay arm extends into the second pocket. Further, the portion of the third delay arm may surround a third pocket, and the fourth delay arm may include a portion with a U-shape that extends into the third pocket.

The above structure may further comprise a heater that overlaps with at least a portion of the first delay arm and at least a portion of the second delay arm.

In an embodiment of the invention, a method comprises forming a Mach-Zehnder interferometer including a first directional coupler, a second directional coupler, a first delay arm between the first directional coupler to the second directional coupler, and a second delay arm between the first directional coupler and the second directional coupler. The first delay arm includes a portion with a U-shape that surrounds a pocket, and the second delay arm includes a portion with a U-shape that extends into the pocket.

### BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.
FIG. 1 is a diagrammatic view of a structure for a wavelength-division-multiplexing filter in accordance with embodiments of the invention.
FIG. 2 is a top view of a structure for a Mach-Zehnder interferometer at an initial fabrication stage of a processing method in accordance with embodiments of the invention.
FIG. 2A is a cross-sectional view of the structure taken generally along line 2A-2A in FIG. 2.
FIGS. 3 and 3A are enlarged views of portions of FIG. 2.
FIG. 4 is a cross-sectional view of the structure at a fabrication stage subsequent to FIGS. 2, 2A, 3, 3A.
FIG. 5 is a top view of a structure in accordance with alternative embodiments of the invention.
FIG. 6 is a top view of a structure in accordance with alternative embodiments of the invention.

### DETAILED DESCRIPTION

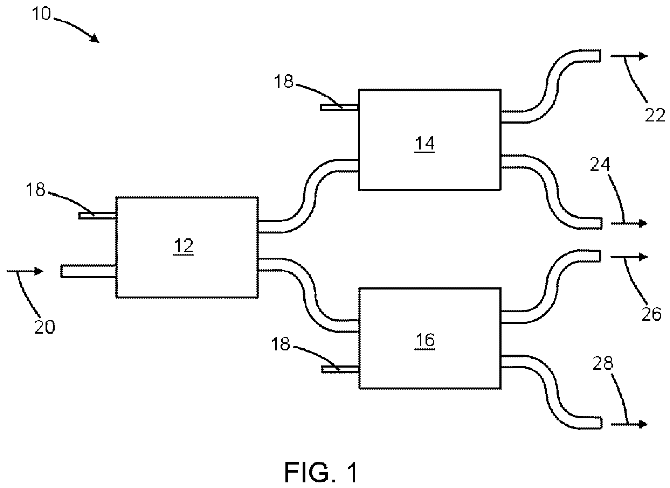

With reference to FIG. 1 and in accordance with embodiments of the invention, a structure 10 for a wavelength-division-multiplexing filter includes a filter stage 12 and a pair of filter stages 14, 16 that are coupled by waveguides to the filter stage 12. Each of the filter stages 12, 14, 16 includes an open terminal that may be coupled with a terminator 18, which may be an absorber or a grating coupler. In alternative embodiments, additional channels may be added to the structure 10 by cascading together additional filter stages with the filter stages 12, 14, 16. In an embodiment, the structure 10 may enable coarse wavelength-division demultiplexing or multiplexing. In an embodiment, the structure 10 may enable dense wavelength-division demultiplexing or multiplexing. The structure 10, in any of its embodiments described herein, may be integrated into a photonic chip.

The structure 10 is a multiple-channel device that may be configured to receive light 20 from a waveguide core at an input to the filter stage 12 that includes mixed optical signals of multiple different wavelengths. For example, light 20 may be characterized by multiple different wavelengths within the near infrared portion (e.g., 850 nanometers to 1650 nanometers) of the electromagnetic spectrum. In the representative embodiment, the structure 10 may be configured to receive light with four different wavelengths, namely optical signals 22, optical signals 24, optical signals 26, and optical signals 28. The filter stages 12, 14, 16 may split or divide the light 20 according to wavelength. The filter stage 12 may separate the optical power for optical signals 22, 24 (e.g., odd wavelengths) from the optical power for the optical signals 26, 28 (e.g., even wavelengths). The light included in the optical signals 22, 24 may be provided by a linking waveguide core from an output of the filter stage 12 to an input to the filter stage 14, and the light included in the optical signals 26, 28 may be provided by a linking waveguide core from another output of the filter stage 12 to an input to the filter stage 16. The filter stage 14 separates the optical power for the optical signals 22 from the optical power for the optical signals 24, directs the optical signals 22 to a waveguide core at an output, and directs the optical signals 24 to a waveguide core at a different output. The filter stage 16 separates the optical power for the optical signals 26 from the optical power for the optical signals 28, directs the optical signals 26 to a waveguide core at an output, and directs the optical signals 28 to a waveguide core at a different output.

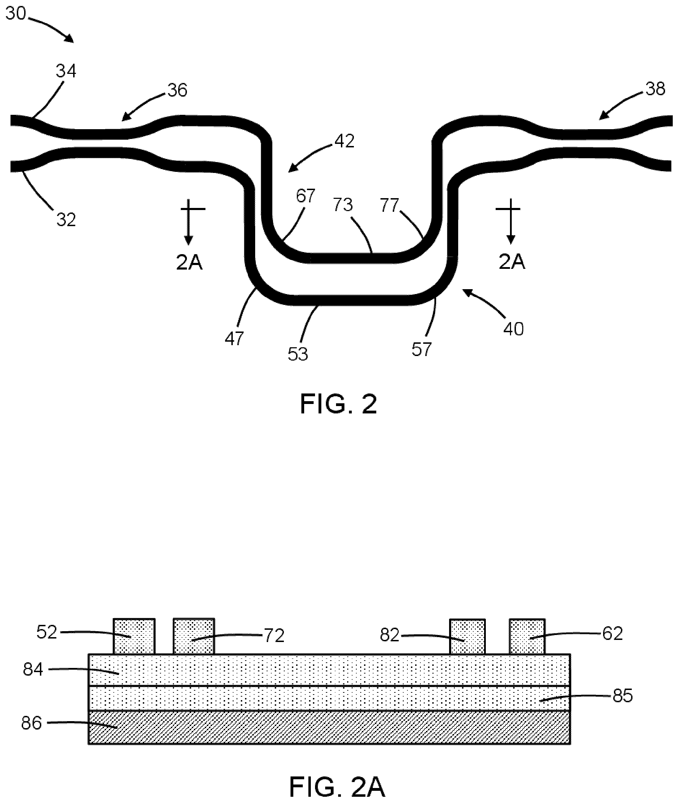

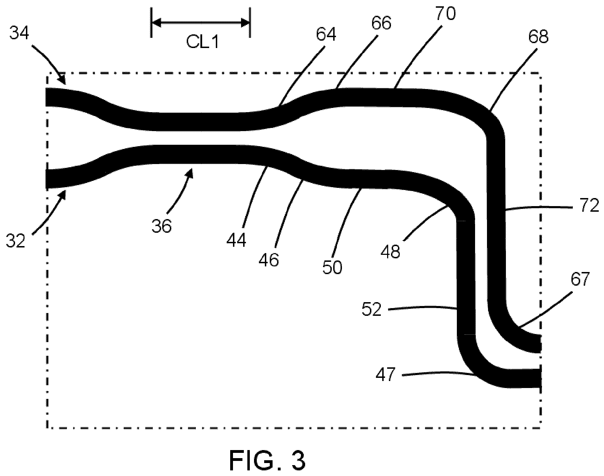

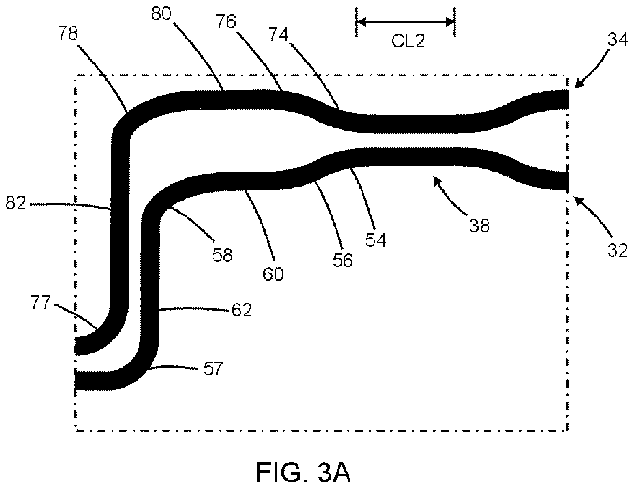

With reference to FIGS. 2, 2A, 3, 3A and in accordance with embodiments of the invention, a structure 30 for a Mach-Zehnder interferometer may be deployed as a photonic component in each of the filter stages 12, 14, 16 of the structure 10 (FIG. 1). In an embodiment, each of the filter stages 12, 14, 16 may include multiple cascaded instances of the structure 30.

The structure 30 includes a waveguide core 32 and a waveguide core 34 that is paired with the waveguide core 32 to structurally form the Mach-Zehnder interferometer. The waveguide cores 32, 34 are routed to include adjacent sections that represent a directional coupler 36, adjacent sections that represent a directional coupler 38, a delay arm 40, and a delay arm 42. The delay arm 40 is coupled to the section of the waveguide core 32 participating in the directional coupler 36 and is also coupled to the section of the waveguide core 32 participating in the directional coupler 38. The delay arm 42 is coupled to the section of the waveguide core 34 participating in the directional coupler 36 and is also coupled to the section of the waveguide core 34 participating in the directional coupler 38. The delay arms 40, 42 are arranged along the length of the waveguide cores 32, 34 between the directional coupler 36 and the directional coupler 38. The directional coupler 36 has a coupling length CL1 over which the participating sections of the waveguide cores 32, 34 have a spacing that permits light coupling. Similarly, the directional coupler 38 has a coupling length CL2 over which the participating sections of the waveguide cores 32, 34 have a spacing that permits light coupling. In an alternative embodiment, the directional couplers 36, 38 may be replaced by a different type of optical coupler, such as a multi-mode interference coupler.

The directional coupler 36 includes bends 44, 46 that couple the section of the waveguide core 32 participating in the directional coupler 36 to a section 50 of the delay arm 40, and the delay arm 40 includes a bend 48 that couples the section 50 to a section 52 of the delay arm 40. The section 50 is arranged between the bend 46 and the bend 48, and the bend 48 is arranged between the section 50 and the section 52. The bends 44, 46 are arranged between the section 50 and the section of the waveguide core 32 participating in the directional coupler 36. The bend 46 and the bend 48 may adjoin opposite ends of the section 50.

The directional coupler 38 includes bends 54, 56 that couple the section of the waveguide core 32 participating in the directional coupler 38 to a section 60 of the delay arm 40, and the delay arm 40 includes a bend 58 that couples the section 60 to a section 62 of the delay arm 40. The section 60 is arranged between the bend 56 and the bend 58, and the bend 58 is arranged between the section 60 and the section 62. The bends 54, 56 are arranged between the section 60 and the section of the waveguide core 32 participating in the directional coupler 38. The bend 56 and the bend 58 may adjoin opposite ends of the section 60.

The directional coupler 36 includes bends 64, 66 that couple the section of the waveguide core 34 participating in the directional coupler 36 to a section 70 of the delay arm 42 and the delay arm 42 includes a bend 68 that couples the section 70 to a section 72 of the delay arm 40. The section 70 is arranged between the bend 66 and the bend 68, and the bend 68 is arranged between the section 70 and the section 72. The bends 64, 66 are arranged between the section 70 and the section of the waveguide core 34 participating in the directional coupler 36. The bend 66 and the bend 68 may adjoin opposite ends of the section 70.

The directional coupler 38 includes bends 74, 76 that couple the section of the waveguide core 34 participating in the directional coupler 38 to a section 80 of the delay arm 42 and the delay arm 42 includes a bend 78 that couples the section 80 to a section 82 of the delay arm 40. The section 80 is arranged between the bend 76 and the bend 78, and the bend 78 is arranged between the section 80 and the section 82. The bends 74, 76 are arranged between the section 80 and the section of the waveguide core 34 participating in the directional coupler 38. The bend 76 and the bend 78 may adjoin opposite ends of the section 80.

The section 52, the section 53, the section 62, and the bends 47, 57 represent a U-shaped portion of the delay arm 40 that surrounds a pocket of space in which a U-shaped portion of the delay arm 40 is positioned. Specifically, a portion of the section 72, the section 73, a portion of the section 82, and the bends 67, 77 represent the U-shaped portion of the delay arm 42 that is arranged inside the U-shaped portion of the delay arm 40. The U-shaped portions of the delay arms 40, 42 have a spacing that is sufficient to prevent crosstalk of the guided light.

The waveguide core 32 diverges away from the directional coupler 36 due to the routing of the bends 44, 46, and the waveguide core 34 diverges away from the directional coupler due to the routing of the bends 64, 66. The section 50 of the delay arm 40, which extends from the bend 46 to the bend 48, and the section 70 of the delay arm 42, which extends from the bend 66 to the bend 68, may be aligned either parallel or substantially parallel to each other. The bend 48 and the bend 68 curve in the same direction such that the section 52 of the delay arm 40 and the section 72 of the delay arm 42 extend either parallel or substantially parallel to each other with the section 72 adjacent to the section 52. The relative lengths of the section 50 and the section 70 may be selected such that the bends 48, 68 can curve in the same direction and the sections 52, 72 can have side-by-side routing.

The waveguide core 32 diverges away from the directional coupler 38 due to the routing of the bends 54, 56, and the waveguide core 34 diverges away from the directional coupler 38 due to the routing of the bends 74, 76. The section 60, which extends from the bend 56 to the bend 58, and the section 80, which extends from the bend 76 to the bend 78, may be aligned either parallel or substantially parallel to each other. The bend 58 and the bend 78 curve in the same direction such that the section 62 of the delay arm 40 and the section 82 of the delay arm 42 extend either parallel or substantially parallel to each other with the section 82 adjacent to the section 62. The relative lengths of the section 60 and the section 80 may be selected such that the bends 58, 78 can curve in the same direction and the sections 62, 82 can have side-by-side routing.

The delay arm 42 includes a portion with a U-shape that is arranged inside a portion of the delay arm 40 that also has a U-shape such that the U-shaped portion of delay arm 42 is folded and fitted inside a pocket surrounded by the U-shaped portion of the delay arm 40. The U-shaped portion of the delay arm 40 includes a section 53, the section 52 that is connected by a bend 47 to the section 53, and the section 62 that is connected by a bend 57 to the section 53. The section 53 may be aligned either parallel or substantially parallel to the sections 50, 60 of the delay arm 40 and either transverse or substantially transverse to the sections 52, 62 of the delay arm 40. The U-shaped portion of the delay arm 42 includes a section 73, the section 72 that is connected by a bend 67 to the section 73, and the section 82 that is connected by a bend 77 to the section 73. The section 73 may be aligned either parallel or substantially parallel to the sections 70, 80 of the delay arm 42 and either transverse or substantially transverse to the sections 72, 82 of the delay arm 42.

The bends 44, 46, the bends 54, 56, the bends 64, 66, and the bends 74, 76 may have the shape of Bezier curves with a gradual curvature that varies based on a Bezier function. A Bezier curve is a parametric curve with a curved path defined by a set of control points having relative positions that define the shape of the curve. The gradual curvature of the bends 44, 46, the bends 54, 56, the bends 64, 66, and the bends 74, 76 enables adiabatic, or approximately adiabatic, mode evolution of light propagating in these portions of the directional couplers 36, 38.

The section 50 of the delay arm 40 has a junction at the intersection with the bend 46 and a junction at the intersection with the bend 48. The section 50 has a length measured between the junction with the bend 46 and the junction with the bend 48. The section 70 of the delay arm 42 has a junction at the intersection with the bend 66 and a junction at the intersection with the bend 68. The section 70 has a length measured between the junction with the bend 66 and the junction with the bend 68. To enable the bend 68 to curve in the same direction as the bend 48 and thereby facilitate the folding of the U-shaped portion of the delay arm 42 into the pocket interior of the U-shaped portion of the delay arm 40, the length of the section 70 may be greater than the length of the section 50.

The section 60 of the delay arm 40 has a junction at the intersection with the bend 56 and a junction at the intersection with the bend 58. The section 60 has a length measured between the junction with the bend 56 and the junction with the bend 58. The section 80 of the delay arm 42 has a junction at the intersection with the bend 76 and a junction at the intersection with the bend 78. The section 80 has a length measured between the junction with the bend 76 and the junction with the bend 78. To enable the bend 78 to curve in the same direction as the bend 58 and thereby facilitate the folding of the U-shaped portion of the delay arm 42 into the pocket interior of the U-shaped portion of the delay arm 40, the length of the section 80 may be greater than the length of the section 60.

The section 52 of the delay arm 40 has a junction at the intersection with the bend 47 and a junction at the intersection with the bend 48. The section 52 has a length measured between the junction with the bend 47 and the junction with the bend 48. The section 72 of the delay arm 42 has a junction at the intersection with the bend 67 and a junction at the intersection with the bend 68. The section 72 has a length measured between the junction with the bend 67 and the junction with the bend 68. In an embodiment, the length of the section 72 may be greater than the length of the section 52.

The section 62 of the delay arm 40 has a junction at the intersection with the bend 57 and a junction at the intersection with the bend 58. The section 62 has a length measured between the junction with the bend 57 and the junction with the bend 58. The section 82 of the delay arm 42 has a junction at the intersection with the bend 77 and a junction at the intersection with the bend 78. The section 82 has a length measured between the junction with the bend 77 and the junction with the bend 78. In an embodiment, the length of the section 82 may be greater than the length of the section 62.

The section 53 of the delay arm 40 has a junction at the intersection with the bend 47 and a junction at the intersection with the bend 57. The section 53 has a length measured between the junction with the bend 47 and the junction with the bend 57. The section 73 of the delay arm 42 has a junction at the intersection with the bend 67 and a junction at the intersection with the bend 77. The section 73 has a length measured between the junction with the bend 67 and the junction with the bend 77. In an embodiment, the length of the section 53 may be greater than the length of the section 73, which results from the fitting of the U-shaped portion of the delay arm 42 inside the pocket surrounded by the U-shaped portion of the delay arm 40.

In an embodiment, the total length and associated optical path of the delay arm 42 differs from the total length and associated optical path of the delay arm 40. In an embodiment, the total length and associated optical path of the delay arm 42 may be greater than the total length and associated optical path of the delay arm 40. The lengths of the delay arms 40, 42 may be adjusted to maintain the same total length for both delay arms relative to a comparable design for the delay arms of a conventional Mach-Zehnder interferometer that extend away from each other in opposite directions. The length adjustments may include at least two different length segments in each delay arm 40, 42 that may be located in different locations in each of the delay arms 40, 42.

The waveguide cores 32, 34 may be positioned in a vertical direction over a dielectric layer 84, a dielectric layer 85, and a substrate 86. In an embodiment, the dielectric layers 84, 85 may be comprised of a dielectric material, such as silicon dioxide, and the substrate 86 may be comprised of a semiconductor material, such as single-crystal silicon. In an embodiment, the dielectric layer 85 may be a buried oxide layer of a silicon-on-insulator substrate. In an alternative embodiment, the dielectric layer 84 may be omitted such that the waveguide cores 32, 34 are positioned directly on the dielectric layer 85.

In an embodiment, the waveguide cores 32, 34 may be comprised of a material having a refractive index that is greater than the refractive index of silicon dioxide. In an embodiment, the waveguide cores 32, 34 may be comprised of a dielectric material, such as silicon nitride. In an alternative embodiment, the waveguide cores 32, 34 may be comprised of a different dielectric material, such as silicon oxynitride or aluminum nitride. In an alternative embodiment, the waveguide cores 32, 34 may be comprised of a semiconductor material, such as single-crystal silicon, amorphous silicon, or polycrystalline silicon. In alternative embodiments, other materials, such as a polymer or a III-V compound semiconductor, may be used to form the waveguide cores 32, 34.

In an embodiment, the waveguide cores 32, 34 may be formed by patterning a layer of material with lithography and etching processes. In an embodiment, the waveguide cores 32, 34 may be formed by patterning a deposited layer of a material (e.g., silicon nitride). In an alternative embodiment, the waveguide cores 32, 34 may be formed by patterning the semiconductor material (e.g., single-crystal silicon) of a device layer of a silicon-on-insulator substrate.

In use, light is input into the directional coupler 36 via either the waveguide core 32 or the waveguide core 34, and the directional coupler 36 splits the light between the waveguide core 32 and the waveguide core 34. A portion of the split light propagates in the delay arm 40 of the waveguide core 32 and another portion of the split light propagates in the delay arm 42 of the waveguide core 34. A difference in the lengths of the respective optical paths in the delay arms 40, 42 results in phase modulation, which produces intensity modulation at the output from the directional coupler 38 when the light from the delay arms 40, 42 is combined. The length of the delay arm 40, the length of the delay arm 42, the splitting ratio of the directional coupler 36, and the splitting ratio of the directional coupler 38 can be varied to vary the performance of the structure 30 or, alternatively, to target the structure 30 for deployment in a specific application.

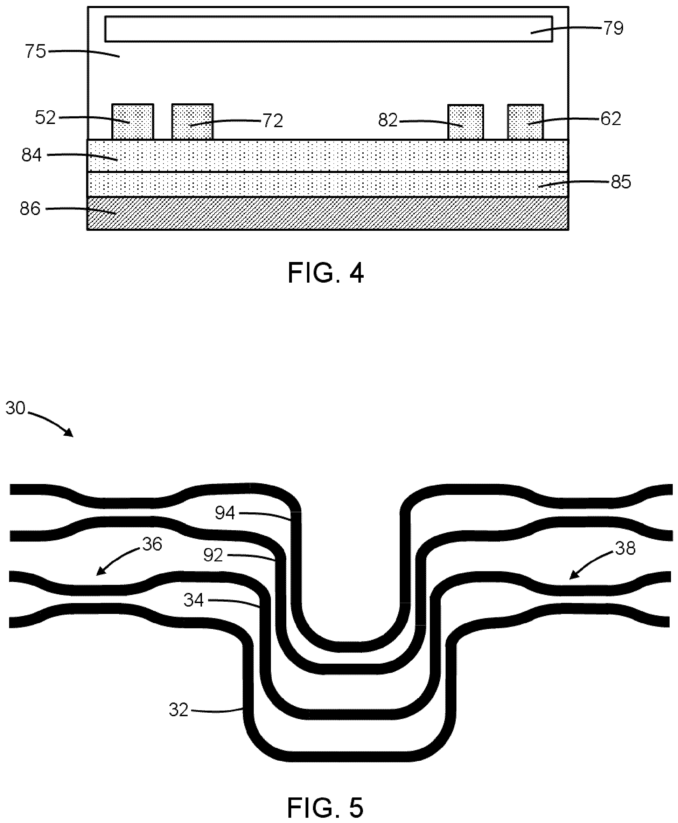

With reference to FIG. 4 and at a fabrication stage subsequent to FIGS. 2, 2A, 3, 3A, a back-end-of-line stack 75 may be formed over the Mach-Zehnder interferometer embodied in the structure 30. The back-end-of-line stack 75 may include stacked dielectric layers in which each dielectric layer is comprised of a dielectric material, such as silicon dioxide, silicon nitride, tetraethylorthosilicate silicon dioxide, or fluorinated-tetraethylorthosilicate silicon dioxide. Dielectric material from one or more of the dielectric layers of the back-end-of-line stack 75 may fill the spaces between the waveguide cores 32, 34, as well as overlie the waveguide cores 32, 34, as low-index cladding.

In an embodiment, a heater 79 may be included in the back-end-of-line stack 75 and the heater 79 may be arranged to overlap with all or part of both of the delay arms 40, 42. The heater 79 may be comprised of a metal, such as titanium nitride, and may be formed by depositing and patterning the metal. The heater 79 may be utilized to concurrently heat both of the delay arms 40, 42, which differs from heaters in conventional Mach-Zehnder interferometers that are arranged to only heat a single delay arm.

The U-shaped portion of the delay arm 42 extends into the pocket surrounded by the U-shaped portion of the delay arm 40, which differs from conventional Mach-Zehnder interferometers in which the pockets of the comparable delay arms are vacant and unfilled. The folding of the U-shaped portion of the delay arm 42 into the pocket surrounded by the U-shaped portion of the delay arm 40 permits a reduction in the area on a photonics chip occupied by the Mach-Zehnder interferometer embodied in the structure 30. Likewise, the folding of the U-shaped portion of the delay arm 42 into the pocket interior of the U-shaped portion of the delay arm 40 permits a reduction in the area on a photonics chip occupied by a wavelength-division-multiplexing filter incorporating instances of the Mach-Zehnder interferometer embodied in the structure 30. The Mach-Zehnder interferometer embodied in the structure 30 may be characterized by an improved tolerance to fabrication variations that would otherwise result from the fabrication of conventional Mach-Zehnder interferometers in which the comparable delay arms extend in an opposite direction and are more widely separated.

The bend 68 curves in the same direction as the bend 48 and the bend 78 curves in the same direction as the bend 58, which differs from conventional Mach-Zehnder interferometers in which the comparable bends curve in opposite directions. The different lengths of the sections 50, 70, both of which are absent in conventional Mach-Zehnder interferometers, and the different lengths of the sections 60, 80, both of which are absent in conventional Mach-Zehnder interferometers, promote the ability of the U-shaped portion of the delay arm 42 to extend into the pocket surrounded by the U-shaped portion of the delay arm 40. The bends 44, 46 and bends 64, 66 respectively permit the inclusion of the section 50 and the section 70 that extend laterally to promote the folding, and the bends 54, 56 and bends 74, 76 respectively permit the inclusion of the section 60 and the section 80 that extend laterally to also promote the folding.

With reference to FIG. 5 and in accordance with alternative embodiments of the invention, waveguide cores 92, 94 may be formed to represent another instance of a Mach-Zehnder interferometer that is integrated into the structure 30. The waveguide cores 92, 94 may have the same general construction for the directional couplers and delay arms as the directional couplers 36, 38 and delay arms 40, 42 of the waveguide cores 32, 34. A U-shaped portion of the delay arm of the waveguide core 94 extends inside a pocket surrounded by a U-shaped portion of the delay arm for the waveguide core 92. A U-shaped portion of the delay arm of the waveguide core 92 extends inside a pocket surrounded by the U-shaped portion of the delay arm 42 for the waveguide core 34.

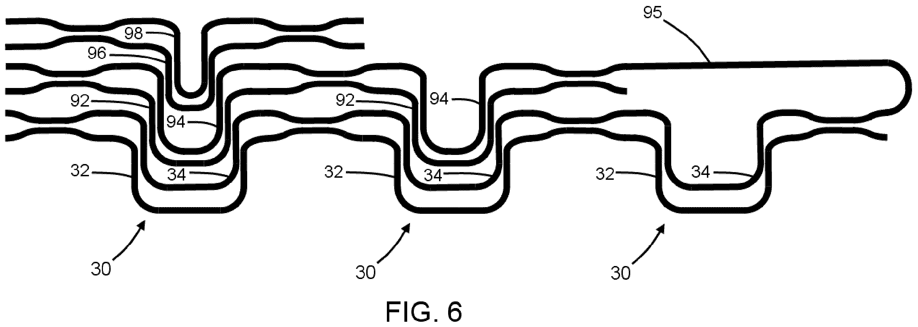

With reference to FIG. 6 and in accordance with alternative embodiments of the invention, multiple cascaded instances of the structure 30 may be coupled together and each instance may of the structure 30 include a different number of Mach-Zehnder interferometers with folded delay arms. In an embodiment, an instance of the structure 30 may include three Mach-Zehnder interferometers, and waveguide cores 96, 98 may be formed to represent the additional instance of the Mach-Zehnder interferometer that is integrated into the structure 30 of FIG. 5. The waveguide cores 96, 98 may have the same general construction for the directional couples and delay arms as the directional couplers 36, 38 and delay arms 40, 42 of the waveguide cores 32, 34. In an embodiment, the instance of the structure 30 including three Mach-Zehnder interferometers may be coupled to an instance of the structure 30, as shown in FIG. 5, including a pair of Mach-Zehnder interferometers, and an instance of the structure 30 including a single Mach-Zehnder interferometer, as shown in FIG. 2, may be coupled to the instance including the pair of Mach-Zehnder interferometers.

A U-shaped portion of the delay arm of the waveguide core 98 extends inside a pocket surrounded by a U-shaped portion of the delay arm for the waveguide core 96. A U-shaped portion of the delay arm of the waveguide core 96 extends inside a pocket surrounded by the U-shaped portion of the delay arm for the waveguide core 94.

The multiple cascaded instances of the structure 30 may be deployed as a filter stage in a wavelength-division-multiplexing filter, such as deployed in one of the filter stages 12, 14, 16 (FIG. 1).

The methods as described above are used in the fabrication of integrated circuit chips. The resulting integrated circuit chips can be distributed by the fabricator in raw wafer form (e.g., as a single wafer that has multiple unpackaged chips), as a bare die, or in a packaged form. The chip may be integrated with other chips, discrete circuit elements, and/or other signal processing devices as part of either an intermediate product or an end product. The end product can be any product that includes integrated circuit chips, such as computer products having a central processor or smartphones.

References herein to terms modified by language of approximation, such as "about", "approximately", and "substantially", are not to be limited to the precise value or precise condition as specified. In embodiments, language of approximation may indicate a range of +/-10% of the stated value(s) or the stated condition(s).

References herein to terms such as "vertical", "horizontal", etc. are made by way of example, and not by way of limitation, to establish a frame of reference. The term "horizontal" as used herein is defined as a plane parallel to a conventional plane of a semiconductor substrate, regardless of its actual three-dimensional spatial orientation. The terms "vertical" and "normal" refer to a direction or plane in the frame of reference perpendicular to the horizontal plane, as just defined. The term "lateral" refers to a direction in the frame of reference within the horizontal plane.

A feature "connected" or "coupled" to or with another feature may be directly connected or coupled to or with the other feature or, instead, one or more intervening features may be present. A feature may be "directly connected" or "directly coupled" to or with another feature if intervening features are absent. A feature may be "indirectly connected" or "indirectly coupled" to or with another feature if at least one intervening feature is present. A feature "on" or "contacting" another feature may be directly on or in direct contact with the other feature or, instead, one or more intervening features may be present. A feature may be "directly on" or "directly contacting" another feature if intervening features are absent. A feature may be "indirectly on" or in "indirect contact" with another feature if at least one intervening feature is present. Different features may "overlap" if a feature extends over, and covers a part of, another feature. A feature may "overlie" another feature if a feature is positioned "over" another feature.

The descriptions of the various embodiments of the present invention have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A structure comprising:
a first Mach-Zehnder interferometer including a first directional coupler, a second directional coupler, a first delay arm between the first directional coupler and the second directional coupler, and a second delay arm between the first directional coupler and the second directional coupler, the first delay arm including a portion with a U-shape that surrounds a first pocket, and the second delay arm including a portion with a U-shape that extends into the first pocket.

2. The structure of claim 1 wherein the first directional coupler includes a first bend and a second bend between the first bend and the portion of the first delay arm.

3. The structure of claim 2 wherein the first bend has a curvature that follows a first Bezier curve, and the second bend has a curvature that follows a second Bezier curve.

4. The structure of claim 2 or claim 3 wherein the second directional coupler includes a third bend and a fourth bend between the third bend and the portion of the second delay arm.

5. The structure of claim 1 wherein the portion of the first delay arm includes a first section, a second section, and a first bend between the first section and the second section, and the first section is aligned transverse to the second section.

6. The structure of claim 5 wherein the portion of the second delay arm includes a third section, a fourth section, and a second bend between the third section and the fourth section, and the third section is aligned transverse to the fourth section.

7. The structure of claim 6 wherein the first section is aligned parallel to the third section, and/or wherein the second section is aligned parallel to the fourth section.

8. The structure of claim 6 or claim 7 wherein the first section is positioned between the first directional coupler and the first bend, and the third section is positioned between the first directional coupler and the second bend, and, optionally, wherein the first section and the third section have unequal lengths.

9. The structure of one of claims 6 to 8 wherein the first bend is positioned between the first directional coupler and the second section, and the second bend is positioned between the first directional coupler and the fourth section, and, optionally, wherein the second section and the fourth section have unequal lengths.

10. The structure of claim 5 wherein the first section is positioned between the first directional coupler and the first bend, and/or wherein the second section is positioned between the second directional coupler and the first bend.

11. The structure of claim 10 wherein the first directional coupler includes a second bend and a third bend, and the second section is positioned between the first bend and the second bend, and, optionally, 15 wherein the second bend has a curvature that follows a first Bezier curve, and the third bend has a curvature that follows a second Bezier curve.

12. The structure of one of claims 1 to 11 further comprising:
a second Mach-Zehnder interferometer including a third directional coupler, a fourth directional coupler, a third delay arm between the third directional coupler and the fourth directional coupler, and a fourth delay arm between the third directional coupler and the fourth directional coupler, the third delay arm including a portion with a U-shape,
wherein the portion of the second delay arm surrounds a second pocket, and the portion of the third delay arm extends into the second pocket.

13. The structure of claim 12 wherein the portion of the third delay arm surrounds a third pocket, and the fourth delay arm includes a portion with a U-shape that extends into the third pocket.

14. The structure of one of claims 1 to 13 further comprising:
a heater that overlaps with at least a portion of the first delay arm and at least a portion of the second delay arm.

15. A method comprising:
forming a Mach-Zehnder interferometer including a first directional coupler, a second directional coupler, a first delay arm between the first directional coupler to the second directional coupler, and a second delay arm between the first directional coupler and the second directional coupler,
wherein the first delay arm includes a portion with a U-shape that surrounds a pocket, and the second delay arm includes a portion with a U-shape that extends into the pocket.
